# EUROPEAN PATENT APPLICATION

(11) **EP 1 302 886 A1**
(43) Date of publication of application: **16.04.2003**
(21) Application number: 02256687.1
(22) Date of filing: 25.09.2002
(51) Int. Cl.: G06F 17/60

(54) **Collecting and/or presenting demographics information in a database system**

(30) Priority: 12.10.2001 US 976632
(71) Applicant: NCR INTERNATIONAL INC., Dayton, Ohio 45479 (US)
(72) Inventor: Brown, Douglas P., Rancho Santa Fe, CA 92067 (US); Chaware, Jeetendra, East Marredpally, Secunderabad (IN)
(74) Representative: Cleary, Fidelma

(57) **Abstract**

A method and apparatus for collecting and presenting demographics information in a database system is provided. Examples of the demographics information include disk space utilization, row count and average row size of the table, statistics information of a column in the table, and blocks distribution of a table across multiple access modules of the database system. Graphical user interfaces are also provided to display demographics information in one of several different formats, including graph format, text format, and so forth.

## Description

A database is a collection of stored data that is logically related and that is accessible by one or more users. A popular type of database is the relational database management system (RDBMS), which includes relational tables made up of rows and columns (also referred to as tuples and attributes). Each row represents an occurrence of an entity defined by a table, with an entity being a person, place, thing, or other object about which the table contains information.

To extract data from, or to update, a relational table in an RDBMS, queries according to a standard database-query language (e.g., Structured Query Language or SQL) are used. Examples of SQL statements include INSERT, SELECT, UPDATE, and DELETE.

As applications become increasingly sophisticated, and data storage needs become greater, higher performance database systems are used. One such database system is the TERADATA® database mangement system from NCR Corporation. The TERADATA® database systems are parallel processing systems capable of handling relatively large amounts of data. In some arrangements, a database system includes multiple nodes that manage access to multiple portions of data to enhance concurrent processing of data access in updates. In TERADATA® database management systems, concurrent data processing is further enhanced by the use of virtual processors, referred to as access module processors (AMPs), to further divide database tasks. Each AMP is responsible for a logical disk space. In response to a query, one or more of the AMPs are invoked to perform database access, updates, and other manipulations.

To improve performance of a database system, various types of tests and analyses are performed. These tests and analyses are designed to determine the performance of queries in a target database system. To perform such tests and analyses, various types of demographics information are needed. Demographics information generally includes information regarding utilization of storage devices in the database system, statistics of tables, and other information regarding tables. In many database systems, limited features exist for the collection and presentation of demographics information. It is an object of the invention to provide an improved method and apparatus for collecting and/or presenting demographics information in a database system.

From a first aspect, the invention resides in a method of presenting demographics information in a database system, comprising providing a graphical user interface screen, receiving selection of an item in the graphical user interface screen and in response to selection of the item, displaying the demographics information in graphical format.

The demographics information may be displayed in text format or any other suitable graphical format, such as a bar chart or line graph format. An interface, in preference, an application programming interface is provided to depict demographics information and the demographics information is preferably stored in a query capture database.

The database system may have plural access modules with a table being distributed across the access modes. The demographics information may then be displayed on a per-access module basis and may comprise storage system utilization and/or statistics information and the storage system utilization associated with each access module. A row count and an average row size of a portion of the table stored by each of the access modules may be displayed, as well as the distribution of a number of blocks on each access module and/or spool space utilization.

From other aspects, the invention resides in a database system comprising means operable to carry out the steps of the method described above and in a computer program comprising code adapted to perform the method when executed on a database system. The invention also resides in such a computer program embodied in a computer-readable storage medium and as a transmission medium.

Embodiments of the invention will now be described with reference to the accompanying drawings in which:
Fig. 1 is a block diagram of an example network of systems, including target database systems, a client system, and a test system.
Fig. 2 is a block diagram of an example database system.
Fig. 3 is a block diagram of components of a query capture database (QCD).
Figs. 4-12 and 21 illustrate various graphical user interface screens for presenting demographics information.
Fig. 13 is a block diagram of components of a demography interface.
Fig. 14 is a flow diagram of a process of collecting and present demographics information.
Figs. 15-20 illustrate tasks performed by an index selection tool.

In the following description, numerous details are set forth to provide an understanding of the present invention. However, it will be understood by those skilled in the art that the present invention may be practiced without these details and that numerous variations or modifications from the described embodiments are possible.

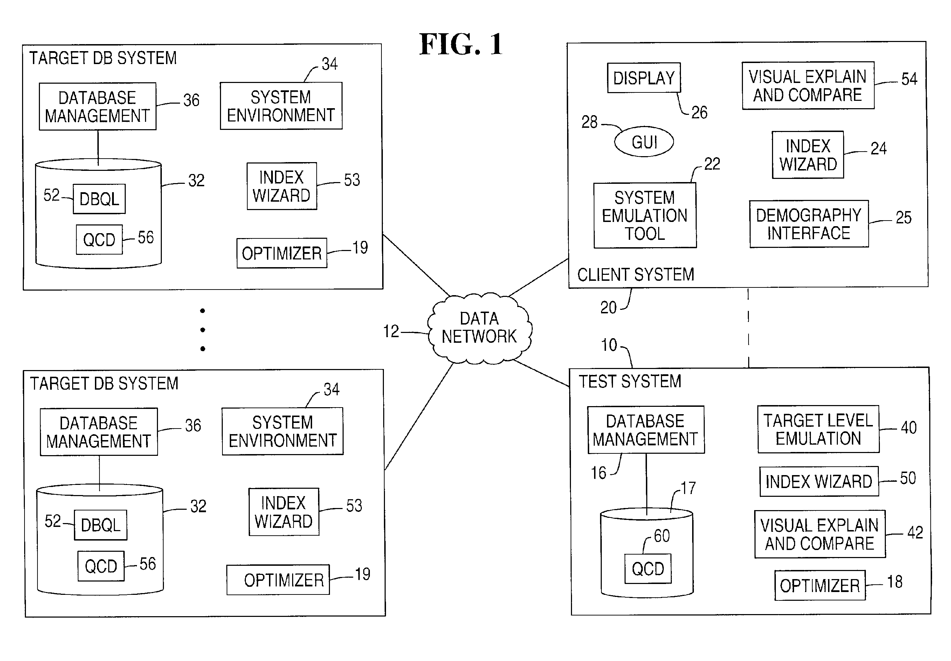

Fig. 1 shows an example arrangement of several target database systems (14A, 14B), a test system 10, and a client system 20. In one example, the target database system 14A is located at a first customer site, while the target database system 14B is located at a second customer site. Essentially, each target database system 14 is a production system that is used by a customer.

The test system 10 is used to test database software before the database software is released for loading on the target database systems 14. Note that although a separate client system 20 and test system 10 are shown, they can actually be combined into one system.

The client system 20 includes a system emulation tool 22, an index wizard client module 24, a visual explain and compare module 54, and a demography interface 25. The tasks of each of these modules are described in further detail below. In some embodiments, the index wizard client module 24, in combination with an index wizard server module 50 executable in the test system 10 or an index wizard server module 53 in a target database system 14, provide an improved mechanism of performing index selection on tables stored in a database system, such as one of the target database systems 14A, 14B.

An index is a structure in a database system that provides relatively rapid access to rows of a table based on the values of one or more columns. An index stores data values and pointers to rows in the base table where those data values occur. An index can be arranged in ascending or descending order, so that the database management system can quickly search the index to find the particular value in the base table. The database management system follows the associated pointer to locate the row containing the value.

In some TERADATA® database management systems, a primary index and one or more optional secondary indexes are defined for each table. In a database system having multiple access modules, such as access module processors (AMPs) in a TERADATA® database management system, the primary index is used for assigning a data row to a particular one of plural access modules. In effect, the primary index determines the distribution of rows of a table across multiple access modules of the database system.

A secondary index is stored in a sub-table of this database system. A "sub-table" is also a relational table. The secondary index does not affect distribution of a table across multiple access modules. However, the secondary index does add to overhead, since the secondary index is stored in sub-tables. Despite the extra storage required, secondary indexes, if properly used, can enhance database performance.

Collectively, the index wizard client module 24 and index wizard server module 50 or 53 are referred to as an "index wizard tool." More generally, the index wizard tool is referred to as an index selection tool. The index wizard tool is one example of a tool that uses the mechanism according to some embodiments for collecting demographics information. However, other tools or modules in the target database systems 14, client system 20, and test systems 10 are also able to use the improved mechanism for collecting demographics information. As described further below, the improved mechanism for collecting demographics information is provided by a demography interface 25 in the client system 20.

Each target database system 14 includes database management software 36 that manages access of data in a respective database made up of plural relational tables (stored in a storage system 32). In accordance with some embodiments, the database is distributed across plural nodes in each target database system 14. Such a multi-node parallel processing system is referred to as a massively parallel processing (MPP) system. Alternatively, the target system 14 is a single-node system having plural processors (sometimes referred to as a symmetric processing system or SMP). In yet another embodiment, a single-node system having a single processor can be used for implementing a database system.

As used here, a "parallel system" refers to a multi-node, multi-processing system, a single-node system having plural CPUs (e.g., an SMP system), or a single-node system running multiple virtual processors on one or more CPUs. A "parallel database system" or "parallel database" refers to a database system or database implemented in the parallel system.

Each target database system 14 is associated with a system environment 34, which is made up of system-specific information as well as database-level information of each target system. Thus, as used here, "environment information" of a target database system refers to the system-specific information, database-level information, or any portion of the system-specific or database-level information.

System-specific information includes such information as the number of nodes in the target system, the number of processors or central processing units (CPUs) per node, the number of virtual processors in each node, and other system information. Database-level information includes statistics, random samples of virtual processors, data manipulation language (DML) statements, data definition language (DDL) statements, and the actual data of the database itself.

Statistics include information on how data is structured in the database, the number of rows in a table and approximations of the distributions of particular data values in columns (or attributes) of a table (or relation). Random samples refer to samples captured access modules. The random samples contain the data demographics of the database portions managed by the access modules. DDL statements affect the structure of database objects, and may include statements such as SQL (Structured Query Language) ALTER statements (to redefine or alter databases, tables, indexes, etc.), CREATE statements (to create databases, indexes, tables, etc.), and so forth. DML statements are statements that manipulate data, such as the COMMIT statement (to make permanent all changes since the beginning of a transaction), DELETE statement (to remove rows from a table), INSERT statement (to add a new row to a table), SELECT statement (to perform a query by selecting rows and columns from one or more tables), UPDATE statement (to change data in a table), and so forth.

The target database systems 14A, 14B are coupled to a data network 12. The data network 12 can be a private network, or it can be a public network such as the Internet. Communications over the data network 12 according to one of various techniques and protocols.

The system emulation tool 22 in the client system 20 is able to export target-level emulation (TLE) data from the target database system 14A, 14B over the data network 12. Once the TLE data is stored in data files in the client system 20, the system emulation tool 22 sends the TLE data to the test system 10. This is referred to as importing the TLE data to the test system 10.

The TLE data exported by the system emulation tool 22 includes environment information, such as cost-related information, statistics, random samples, DDL statements, DML statements, actual database data, and so forth, from the database target systems 14. The environment information is then imported to the test system 10, with the environment information maintained as target-level emulation data 40. With the ability to export TLE data from a target database system 14 and to import the TLE data into the test system 10, an accurate test environment (to emulate a target database system 14) can be created in the test system 10 in which various tests can be performed. Providing an accurate test environment can be beneficial if the test system 10 is a relatively unsophisticated system (when compared to a target database system 14). Thus, for example, a laptop computer can be used to emulate an MPP database system by emulating the environment of the MPP system.

The test system 10 further includes an optimizer module 18 that selects a query plan from among several possible query plans for a given SQL query that accesses data in a database (stored in storage system 17) managed by database management software 16. For more accurate performance determinations, the optimizer module 18 uses the target-level emulation data 40 that has been imported from the system emulation tool 22 to form a test environment in the test system 10 to emulate a desired target system. Running in the emulated environment, the optimizer module 18 identifies and selects the most efficient query plan (or one of the more efficient query plans) for a given query. Based on test performed in the emulated environment, expected performance of various queries in the target database system can be determined. As explained further below, the optimizer module 18 is executed in the emulated environment to perform index selection.

For a given query, the optimizer module 18 identifies a query plan that has the lowest, or one of the lowest, response times. The response time is the amount of time it takes to complete the execution of the query. One technique of query optimization uses a cost model to estimate the response times of a given query plan and to search the space of query plans that return a plan with low cost. In the cost-based optimization model, different methods for doing a unit of work are compared and the most efficient method is selected (the plan with the lowest cost). Because a number of alternatives can be quite large, especially in a parallel database system with a large number of nodes storing a large relational database (with many tables), the optimizer module 18 uses statistics and/or sampling techniques to reduce the search space in optimizing queries. Each target database system 14 also includes an optimizer module 19.

A query plan generated by the optimizer module 18 is stored in a table of a query capture database (QCD) 60, which is made up of several tables. The query plans captured in the QCD 60 are available to various analysis tools, including the index wizard server module 50.

The test system 10 can optionally include a visual explain and compare tool 42, which is in addition to or in place of the visual explain and compare tool 54 in the client system 20. The visual explain and compare module 42 or 54 provides a graphical user interface in which steps of a query plan are displayed. Each step of the query plan is depicted as an icon, with the icons connected by lines to represent the flow of the steps in the query plan. The icons are designed to represent objects such as relational algebraic (e.g., select, project, join); physical algebraic operators such as nested join, merge join, hash join, and so forth; tables; sorts; redistribution; views; duplications; and other objects.

Another feature of the visual explain and compare module 42 or 54 is its ability to graphically or visually compare plural query plans for a given query, with the plural query plans generated under different conditions. This provides the user with the ability to analyze differences between different query plans. Thus, for example, the comparison can be made of query plans for different indexes selected by the index wizard server module 50 that runs in the test system 10.

The index wizard tool automates the index selection process by recommending a set of indexes for a particular workload, which corresponds to a set of queries that are captured from a target database system 14. Thus, the index wizard tool takes as input a workload from a specified system. The workload includes a set of SQL queries such as SELECT, UPDATE, INSERT, and DELETE statements. The workload can also be a single SQL query.

Based on the workload, the index wizard tool recommends a set of indexes that are appropriate for the given workload. If the target database systems 14A, 14B are TERADATA® database systems from NCR Corporation, then the indexes recommended are secondary indexes. The indexes recommended can also be primary indexes. However, note that although reference is made to selecting secondary indexes in this discussion, the invention is not to be limited in scope to selection of secondary indexes. In other types of database systems, other types of indexes can be selected. Thus, the term "index" or "indexes" is intended to cover any index that can be used to enhance table access in a database system. There are several types of secondary indexes, including a unique secondary index (USI) and a non-unique secondary index (NUSI).

The workload can be generated by logging activity in each of the target database systems 14A, 14B. The logged queries are stored in a database query log (DBQL) 52 in each target database system 14. In addition to storing the query, the database query log 52 can also store performance related data for requests such as an account identifier, usage of objects, rows returned, start and finish times, and so forth. The database query log can include various DBQL tables, including a rule table, a main table, a table to store query objects, a table to store query step information, a table to store the SQL statement of a query, a table to store summary and threshold information, and a table to store explain information.

Alternatively, instead of retrieving the workload from the database query log 52, the workload can be retrieved from a QCD 56 in the target database system 14.

The visual explain and compare tool 42 or 54, the system emulation tool 22, and the index wizard tool are considered analysis tools that are used to help determine the performance of database systems and to suggest the tuning of various elements of the database system, such as indexes, that will enhance database performance. Each of the analysis tools uses demographics information that is collected by the demography interface 25 in the client system 20. Note, however, that the demography interface 25 can alternatively reside in the test system 10 or in any of the target database systems 14.

In one embodiment, the demography interface 25 is implemented as an application-programming interface (API). The various modules of the demography API are provided in a dynamic link library (DLL) file. The DLL files are loaded to invoke the API modules. In other embodiments, other mechanism for loading the API are used. The demographics information that is collected by the demography interface 25 includes the following: current and peak disk space utilization of a database table or sub-table (a sub-table is used to store secondary indexes); spool space utilization; row count and average row size distribution of a database table or sub-table; statistics information of a column of a table; and blocks distribution of a table or sub-table. Note that demographics information can also include other information pertaining to how data of a table or tables is stored in a database system.

Disk space utilization refers to the amount of storage space used by a given table or sub-table. More generally, this is referred to as "storage system utilization." Spool space utilization refers to the amount of temporary storage space used for spool files to complete a query execution in the database system. Row count refers to the number of rows of a table or sub-table. Average row size refers to the average row size of rows in a table or sub-table. Blocks distribution refers to the number of blocks on each access module of a database system for storing the table or sub-table. Rows of a table are stored in blocks, which are defined as chunks of storage space having a predetermined size. Statistics information refers to the distribution of data of one or more columns of a table in predefined intervals.

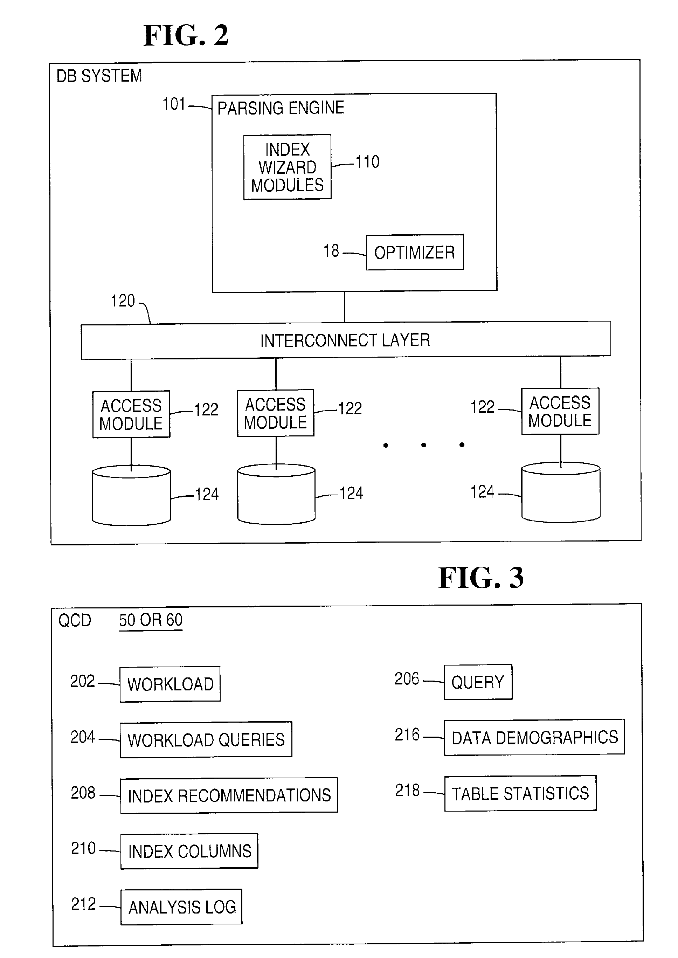

An example database system 100 in which the demographics information is collected is shown in Fig. 2. The database system 100 can be either the test system 10 or a target database system 14. The database system 100 includes a plurality of access modules 122 that control access to respective storage modules 124. Each access module 122 creates, modifies, or deletes definitions of tables; inserts, deletes, or modifies rows within the tables; retrieves information from definitions in tables; and locks databases and tables. In one example, each access module 122 is an access module processor (AMP) used in some TERADATA® database systems from NCR Corporation. The access module 122 can each reside on a separate node in the database system 100, or alternatively, multiple access modules 122 can reside on each node of the database system 100.

The access modules 122 are interconnected by an interconnect layer 120. Also included in the database system is a parsing engine 101. The parsing engine 101 generally receives queries and parses each query into actions to be performed by the access modules 122. The parsing engine 101 includes the optimizer module 18 or 19 along with other components, such as various index wizard modules 110 to perform predicate analysis, candidate index enumeration, and index analysis.

In accordance with one embodiment, the demographics information is captured using a newly defined SQL COLLECTION DATA DEMOGRAPHY statement, which collects demographics information on a per-access module basis for either a base table or a sub-table. In one example, the syntax of the COLLECT statement is as follows:

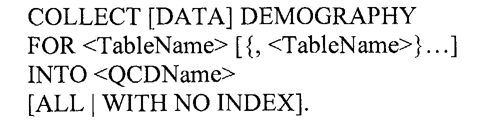

The COLLECT DATA DEMOGRAPHY clause indicates that demographics information is to be captured for the specified table or set of tables. The demographics information is captured into a DataDemographics table 216 in a specified QCD (Fig. 3).

The FOR <TableName> element specifies the table (or tables) for which the demographics information is captured. The table name can optionally be qualified with the database name to which it belongs. If demographics information is to be collected on multiple tables, the table names are separated by commas. The INTO <QCDName> element specifies the QCD name into which the demographics information is to be captured.

The ALL syntactic element indicates that both the primary and sub-table data is to be included in the data demographics details captured. The WITH NO INDEX syntactic element excludes the index sub-table data from the demographics details.

Alternatively, or in addition to the SQL COLLECT DATA DEMOGRAPHY statement, the following SQL statement can also be used to capture demographics information into a specified QCD: 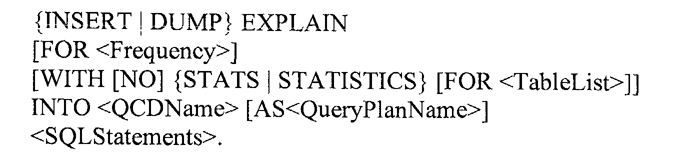 The INSERT/DUMP EXPLAIN clause indicates that the plan for the query is to be captured into the specified QCD. The WITH NO STATISTICS syntactic element indicates that demographics information are not to be captured for the tables in the query. The WITH STATISTICS syntactic elements indicate that demographics information are to be captured for the tables in the query. This is valid in the INSERT EXPLAIN mode, but not in the DUMP EXPLAIN mode.

The For <TableList> syntactic element indicates the list of tables to include or exclude for demographics information and statistics details. If the clause is specified with the WITH NO STATISTICS element, then the tables in the list are excluded from demographics collection, while demographics information is collected for all tables that are used in a query but no in the list. Further, the column statistics are collected on all the columns referenced explicitly with the values in the SQL statement.

If the FOR <TableList> syntactic element is specified with the WITH STATISTICS clause, then demographics information is collected only for the specified tables in the list. Demographics information is not collected for any other table referenced in the query but not in the list. Further, the columns statistics are collected on all columns referenced explicitly with values in the SQL statement.

The INTO <QCDName> element specifies the QCD into which the captured information is to be saved. The AS <QueryPlanName> element specifies the name for the query plan. The <SQLRequest> element specifies the SQL query whose execution plan is to be captured in the QCD. The FOR <Frequency> element specifies the number of times a SQL statement is executed in an identified workload. If the FOR clause is omitted, then the frequency defaults to one.

Note that the difference between the INSERT EXPLAIN statement and the COLLECT DATA DEMOGRAPHY statement is that the INSERT EXPLAIN statement is used in conjunction with a query, whereas the SQL COLLECT DATA DEMOGRAPHY statement can be used to capture the details of a table directly.

In one example implementation, the following statement is used to created the DataDemographics table 216 in the QCD:

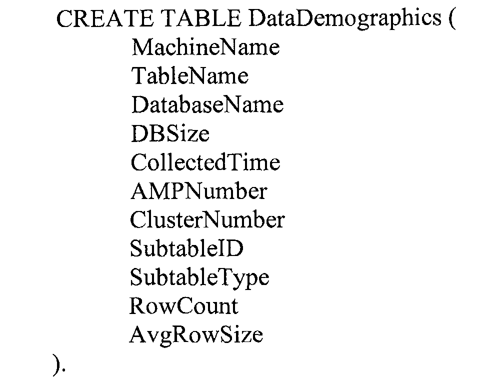

The attribute MachineName is the system name on which the table resides. The attribute TableName is the name of the table, and DatabaseName is the name of the containing database or user. DBSize specifies the datablock size (on an individual AMP) for the table. CollectedTime indicates the timestamp value when the demographics information is collected.

AMPNumber indicates the AMP on which the rows of the table reside. ClusterNumber refers to a cluster that the AMP belongs to (multiple AMPs of a database system are grouped into clusters in one arrangement). The attribute SubtableID identifies a portion of the table. The attribute SubTableType refers to the textual format of the table portion. The attribute RowCount indicates the number of rows in the table portion. The attribute AvgRowSize indicates the average size of the row of the table portion.

As noted above, the demographics information is collected on a per-access modules basis. When presented to the user, the demographics information is also presented on a per-access module basis. This enables a user to conveniently determine if skewing exists in the database system (that is, one or more access modules have more load than another access module in storing portions of a table).

The demographics information is displayed in a frame window in the display 26 of the client system 20. Note that in alternative embodiments, the demographics information is displayed on a display of the test system 10 or a target database system 14. The frame window has an API-specific menu. Using the menu options, a user can switch between the various different output formats and view graphical output in a variety of styles. Some of the different formats are discussed below.

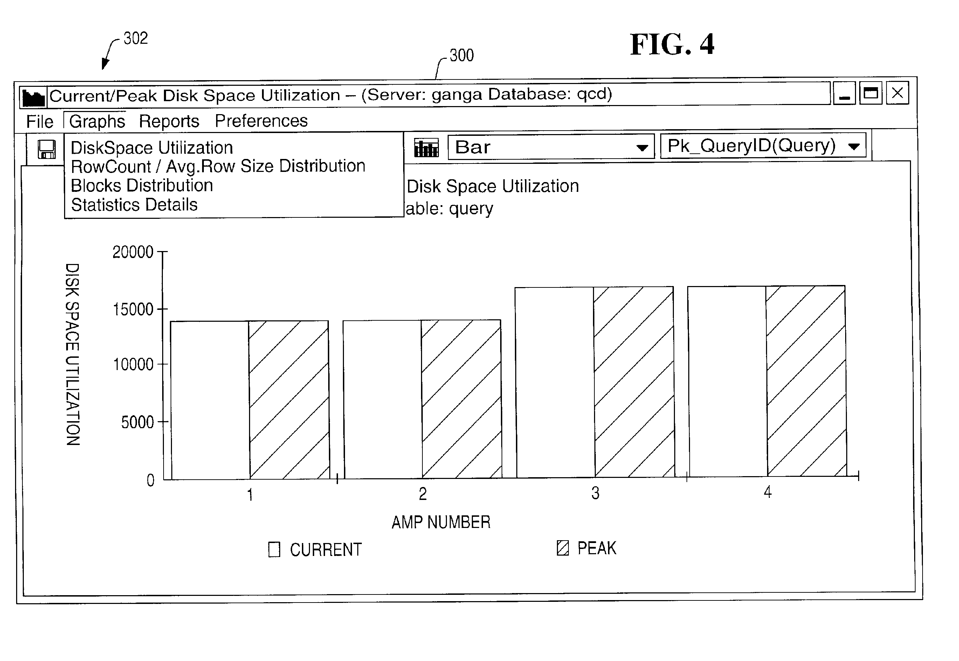

As shown in Fig. 4, a demographics screen 300 is capable of displaying demographics information in graphical format. As used here, "graphical format" refers to a display format for the demographics information that is in the form of some type of a graph or other type of diagram. Graphical format is to be distinguished from text format, where the demographics information is displayed as text. Examples of graphical format include a bar chart, pie chart, line graph, and so forth. Note however, that the present invention does not exclude presentation of demographics information in text format― note that one format that can be used in accordance with some embodiments is a text format (as discussed below).

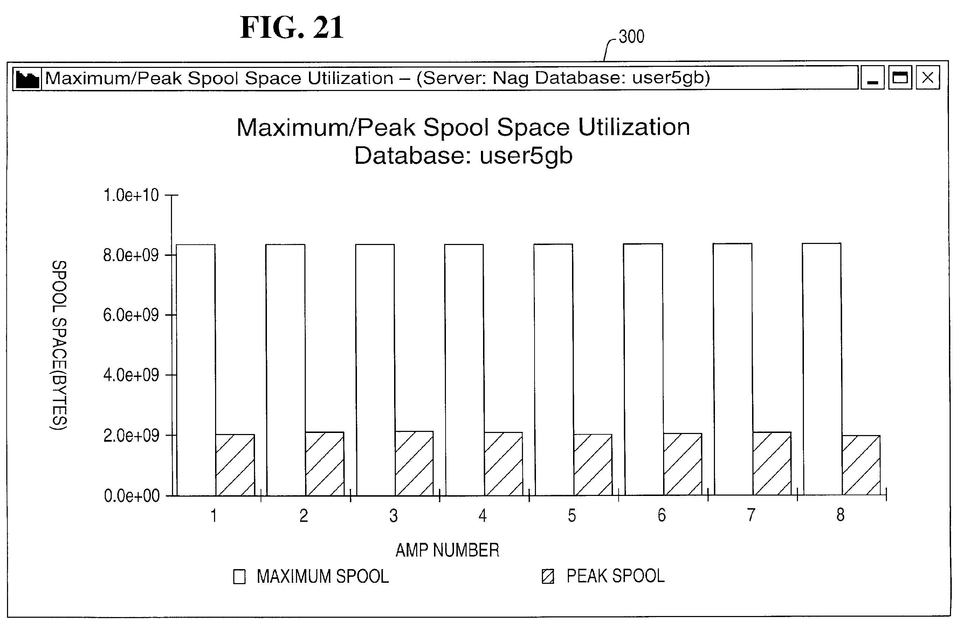

A Graphs menu 302 has several menu items, including a DiskSpace Utilization item, a RowCount/Avg.Row Size Distribution item, a Blocks Distribution item, and a Statistics Details item. Although not shown, a menu item for displaying spool space utilization can also be included. In the example of Fig. 4, the current disk space utilization and peak disk space utilization are shown. The spool space utilization in graphical format is shown in Fig. 21.

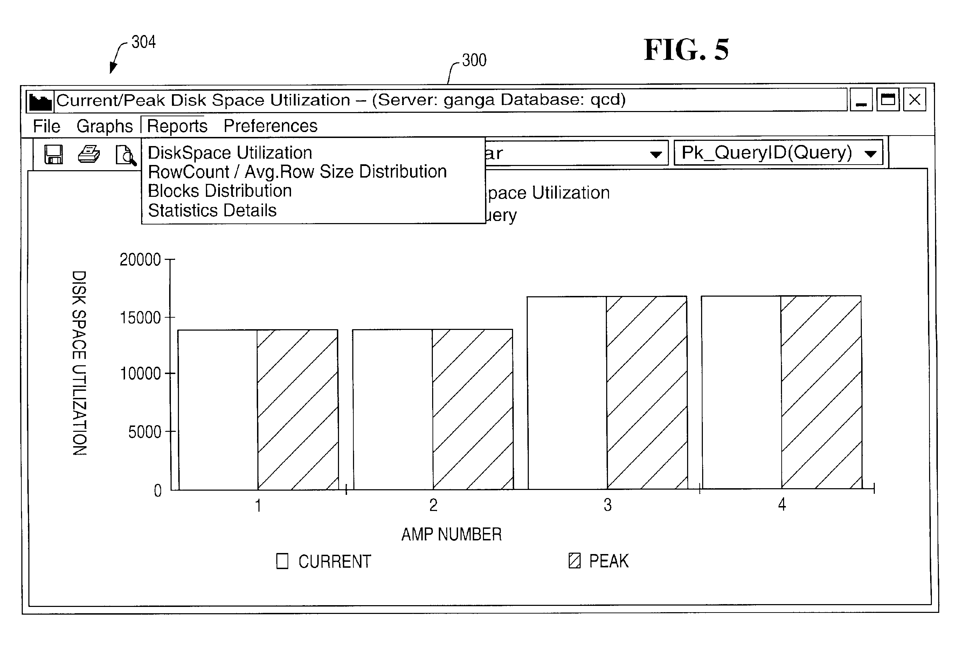

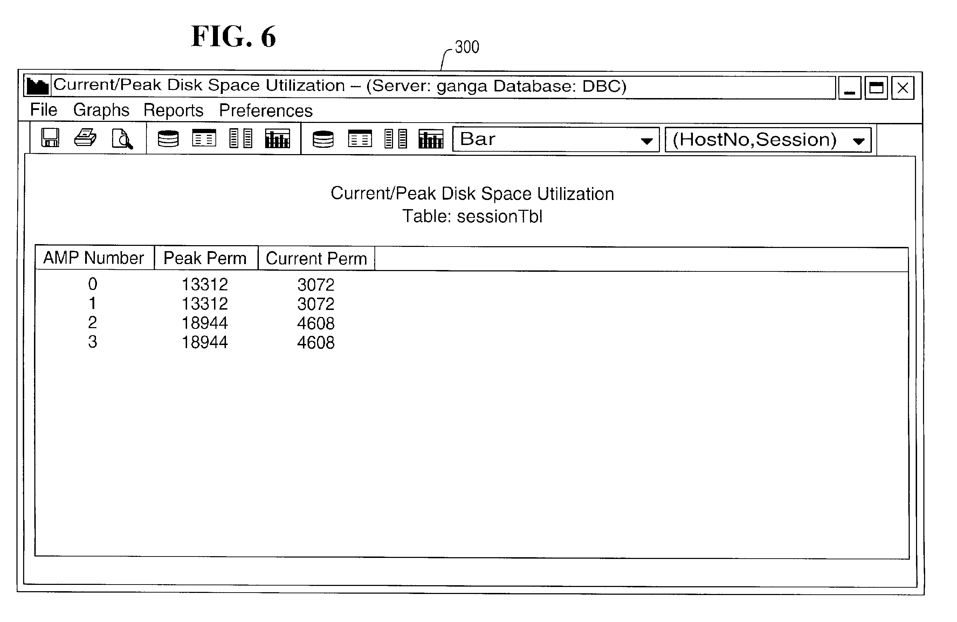

Fig. 5 illustrates a Reports menu 504, which has the same items as the Graphs menu 302. The difference is in the way the output is displayed. The graphical output shown in Figs. 4 and 5 are in response to selection of the DiskSpace Utilization menu item in the Graphs menu 302. Fig. 6 shows diskspace utilization in a report format, in which three columns of information are provided in rows and columns. The first column represents the access module number, the second column represents the peak disk space utilization, and the third column represents the current disk space utilization.

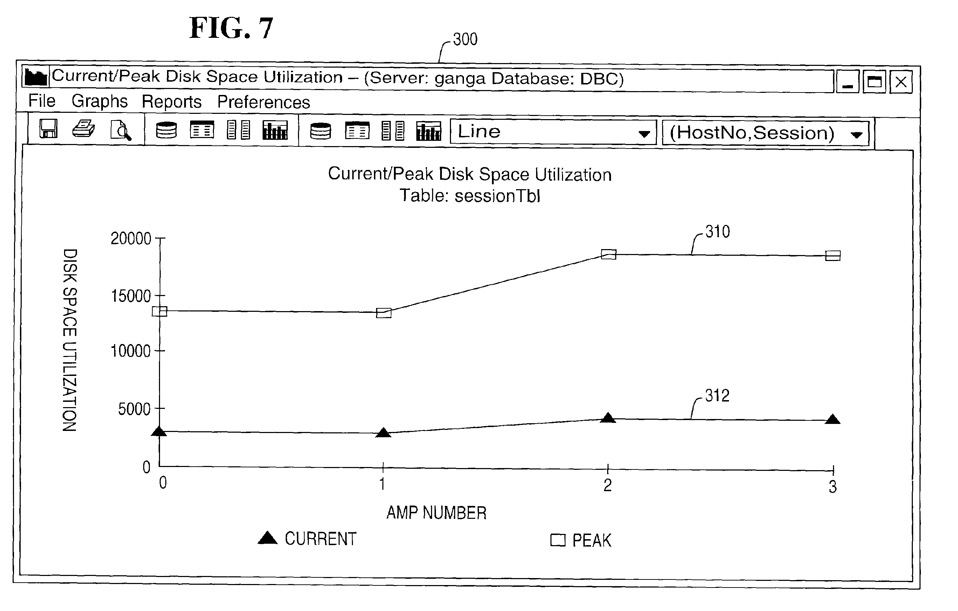

Fig. 7 shows the display of the disk space utilization in an alternative graphical format. In this case, disk space utilization is shown as a line graph. A curve 310 represents the peak disk space utilization, while a curve 312 represents a current disk space utilization.

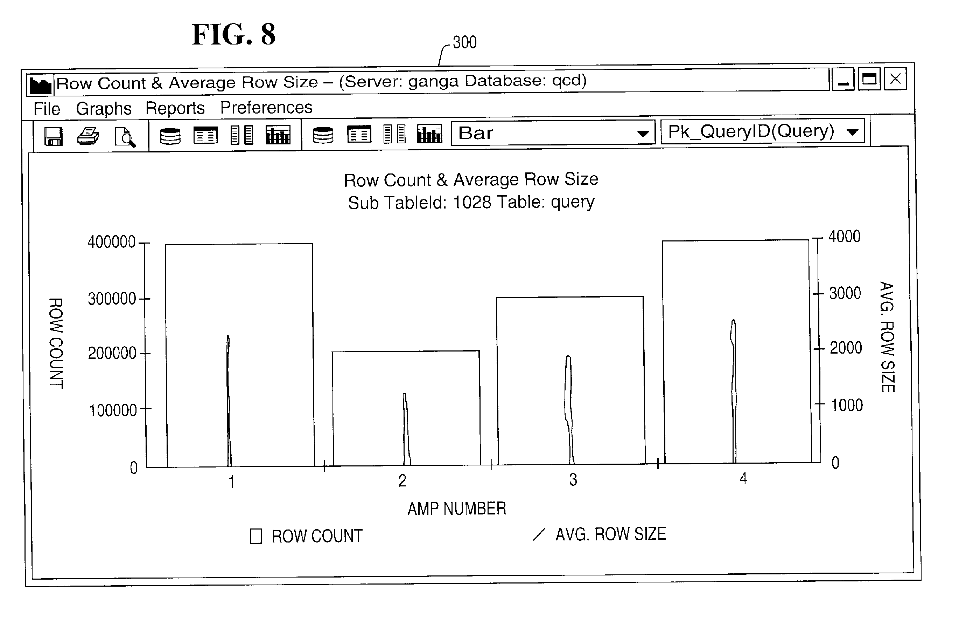

Selection of the RowCount/Avg.Row Size Distribution menu item in either the Graphs menu 302 or Report menu 304 causes the display of a row count and average row size distribution of a table or index sub-table over different access modules. Fig. 8 shows the row count and average row size of each access module in graphical output. The number of rows of a table in each access module, and the average row size of the table on each access module are shown.

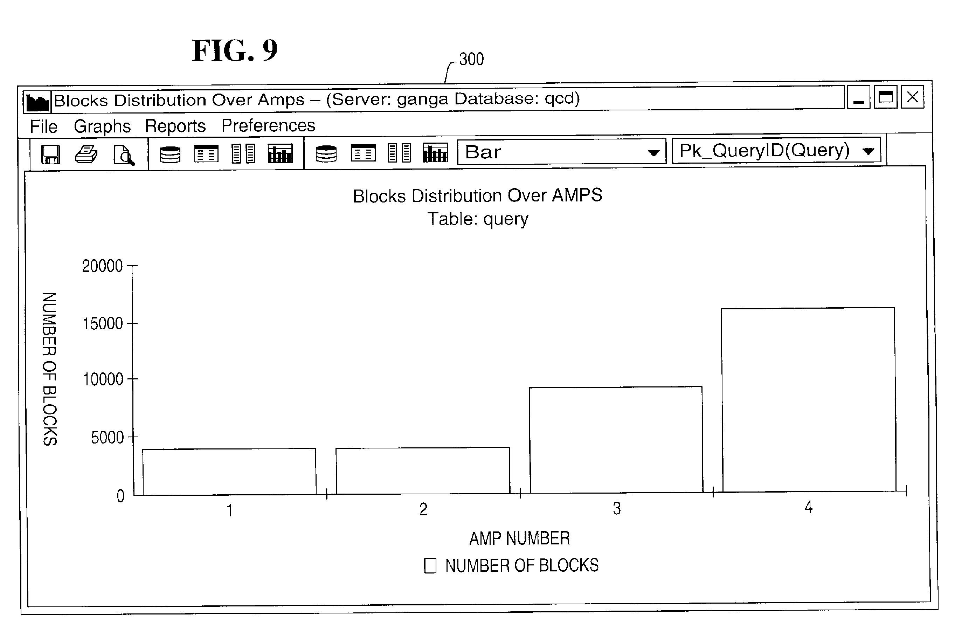

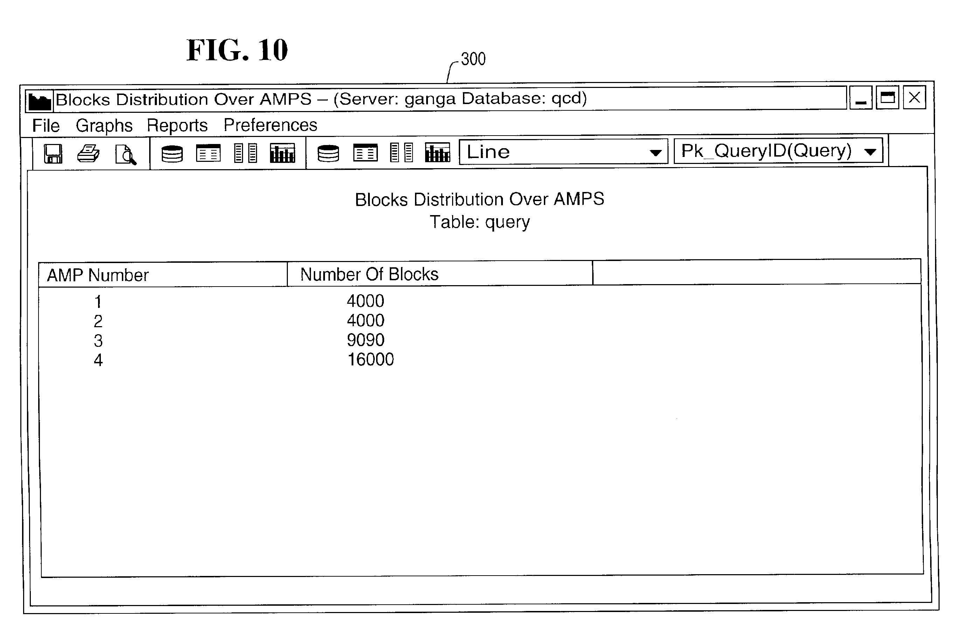

Fig. 9 represents the blocks distribution of a table on the four access modules. A block is defined as some predetermined amount of storage space for storing data. Note that access module 4 has a greater number of blocks allocated for the table than access module 1, in this example. The blocks distribution in report format is shown in Fig. 10, in which the number of blocks used on each access module for a table is shown in text format.

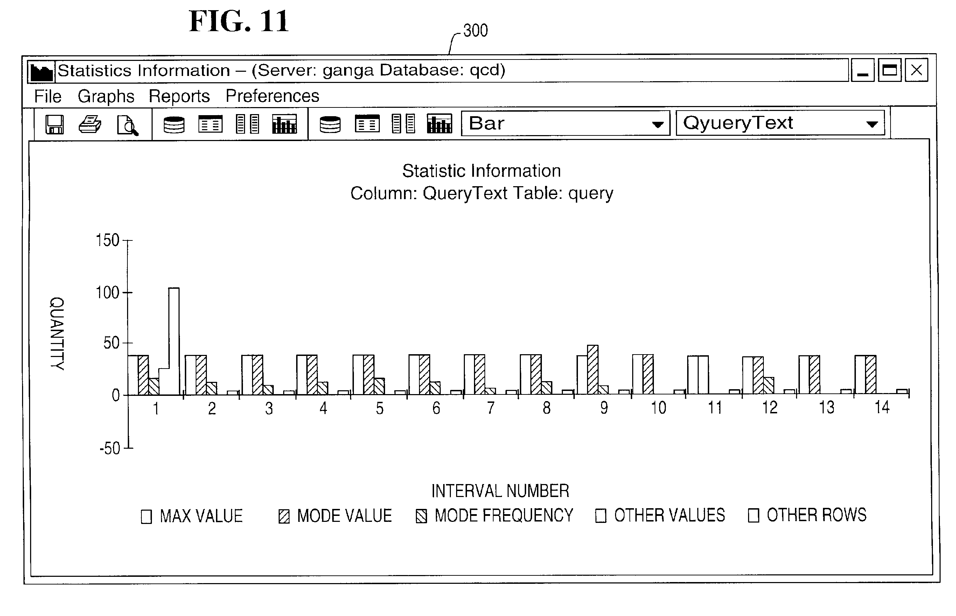

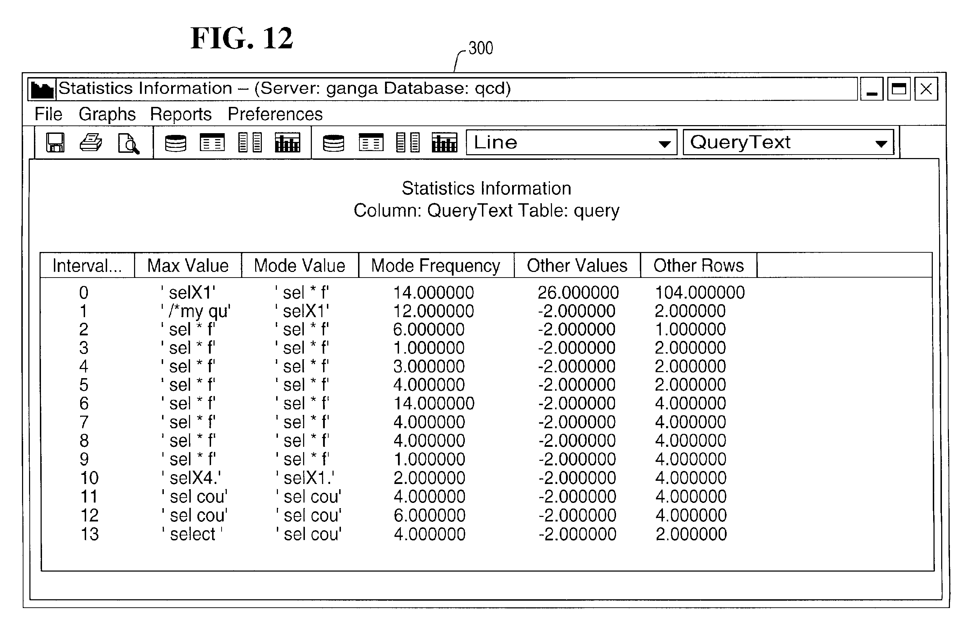

Fig. 11 shows the statistics information in 14 different intervals. The statistics information is available in the TableStatistics table 218 in the QCD 9Fig. 3). The report format of the statistics output is shown in Fig. 12.

Statistics include the following information (in one example implementation): MaxVal (the maximum value of a column covered by a given interval); Mode (the most frequent value of the column in the interval); ModeFreq (the number of rows with the most frequent value); Values (the number of values not equal to the Mode value); and Row (the number of rows not equal to the Mode Value).

An interval represents a portion of a table for which statistics information is collected. Assuming N intervals, the table is divided into N portions. As shown in Figs. 11 and 12, the MaxVal, Mode, ModeFreq, Values, and Rows values are shown in each of the 14 intervals.

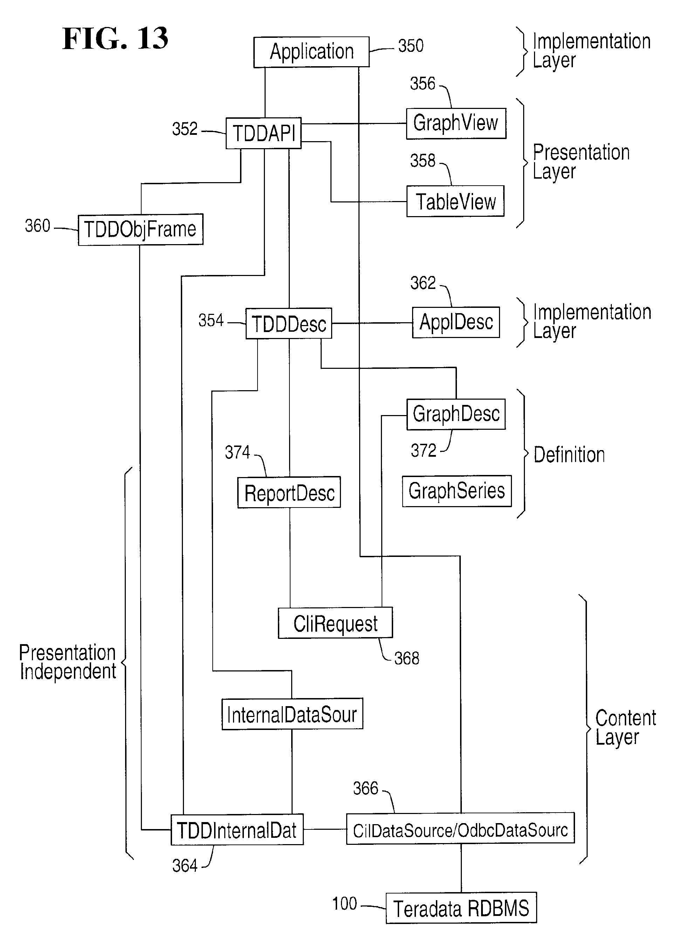

Fig. 13 illustrates the various different layers that make up the demography API 25. An application 350 that is capable of using the demography API 25 includes the index wizard client module 24, the visual explain and compare module 54, and the system emulation tool 22 in the client system 20 (Fig. 1). A TDDAPI module 352 is part of a presentation layer, with the TDDAPI module offering an interface to the client application 350. The TDDAPI module 352 creates a TDDDesc object 354 and creates an appropriate view object (e.g., GraphView object 356 or a TableView object 358). The TDDAPI module 352 attaches the TDDDesc object 354 to the view object (356 or 358) so that the graph or report can be displayed. The TableView object 358 displays data in a layout defined by a ReportDesc object 374. The GraphView object 356 displays data in a layout defined by a GraphDesc object 372. The ReportDesc and GraphDesc objects 374 and 372 are part of a definition layer.

The TDDDesc object 354 contains the description (graph or report format description) of any one of the demography types-disk space utilization, row count/average row size distribution, column statistics, or blocks distribution). Note that the TDDDesc module 354 is part of an implementation layer.

The TDDAPI module 852 also creates a TDDObjFrame object 360 to handle all events of the menu options and other options in frames or screens presented to users. In response to the user selecting an icon or other item in a screen (such as in any one of the screens shown in Figs. 4-12), the TDDObjFrame object 360 handles such events, and communicates such events to other components of the demography interface 25, including the TDDAPI module 352 and a TDDInternalData object 364 in the content layer of the demography interface 25.

The TDDInternalData object 364 interacts with a database system 100 (e.g., system 10 or 14 in Fig. 1) to retrieve the following details: current and peak disk space utilization of a table or sub-table; row count and average row size distribution of a table or a sub-table; blocks distribution of a table or a sub-table; and statistics of a column of a table.

Also in the implementation layer of the demography interface 25 is an ApplDesc object 362, which encapsulates functionality of a single query. The ApplDesc object 362 creates the CliDataSource or OdbcDataSource object 366 (in the content layer). The ApplDesc object 362 also creates the CliRequest object 368 (content layer), the GraphDesc or ReportDesc object 372 or 374 (both in the definition layer).

The GraphDesc object 372 contains the definition of the graphical layout of the results of a query (such as the definition of titles, labels of axes, graph style, line, bar, pie, etc.), graph attributes (color, patterns), and so forth. The ReportDesc object 372 contains the definition of the report layout of the results of a query, defining titles, labels, formats, and column justifications.

The CliRequest object 368 defines the query that is to be executed to obtain the content. The CliDataSource or OdbcDataSource object 866 defines where the query is to be executed. It defines the system name, log-on information, and password. The object 866 submits the query to the database (generally in a separate thread), and the object 366 stores the results in the memory of the client system 20. The CliDataSource object uses a Call Level Interface (CLI) to the database system 100, and the OdbcDataSource object uses an Open Database Connectivity (ODBC) interface.

Note that the arrangement of the demography interface 25 above is one example implementation. Other implementations have other arrangements.

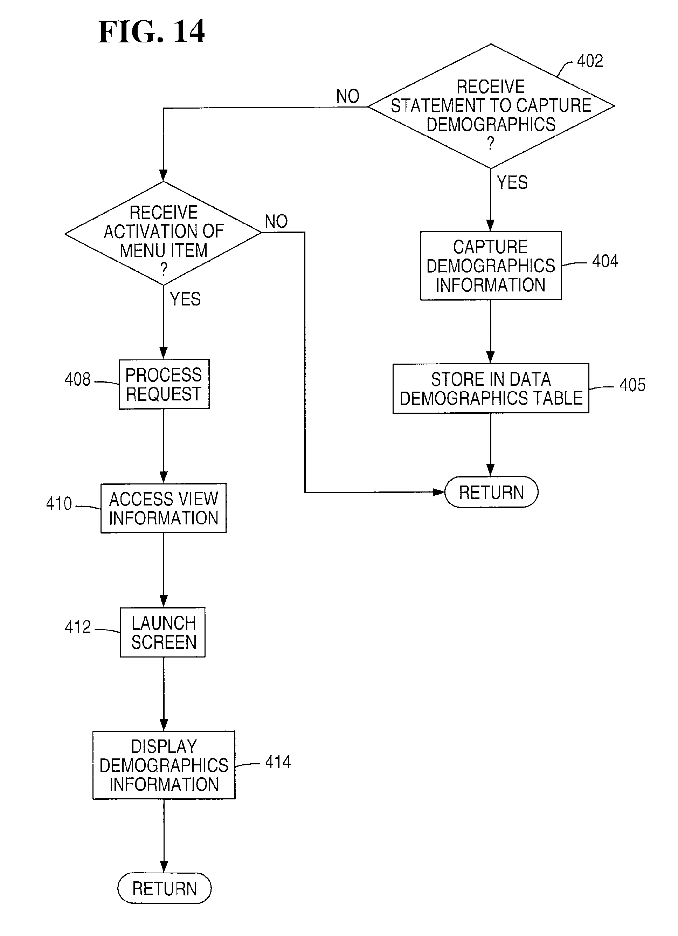

The following generally describes the tasks performed by the demography interface 25 for performing the capture of demography information for display. As shown in Fig. 14, the demography interface 25 determines if it has received (at 402) a statement to capture demographics information. As noted above, this statement includes either one of the SQL COLLECT DATA DEMOGRAPHY statement or the INSERT EXPLAIN statement. If such a statement is received, the demography interface 25 (using its TDDAPI module 352 and its TDDInternalData object 364) retrieves (at 404) demographics data from the database system 100 for the identified tables. The demographics information is stored in the DataDemographics table 216 in the specified QCD (at 405).

Another request that can be received by the demography interface 25 is activation of a menu item in one of the GUI screens presented in the demography interface 25 (Figs. 4-12). Thus, the demography interface 25 determines (at 406) if it has received activation of a menu item in one of the screens. If so, the demography interface 25 processes (at 408) the request, and accesses (at 410) the view information (in the GraphView object 356 or TableView object 358). Next, the appropriate screen is launched (at 412), and the demographics information is displayed (at 414).

The following describes some tasks performed by the index wizard tool, which is one tool that uses the demography interface 25 to obtain demographics information. However, it is noted that the presence of the index wizard tool is not needed for purposes of this invention. A more detailed explanation of the index wizard tool is provided in U.S. Patent Application entitled "INDEX SELECTION IN A DATABASE SYSTEM," filed concurrently herewith by Douglas P. Brown, Jeetendra Chaware, and Manjula Koppuravuri, hereby incorporated by reference.

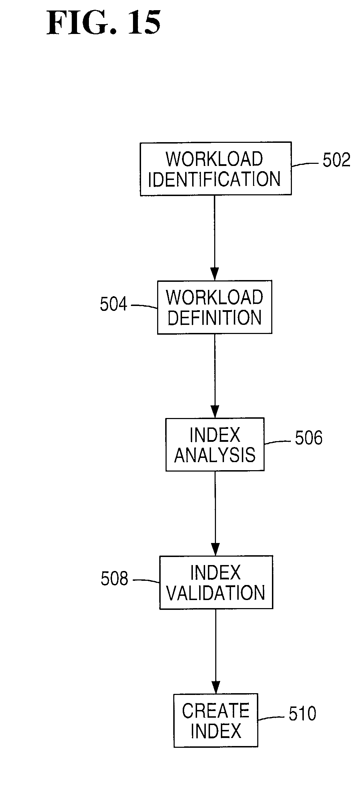

Fig. 15 shows the general tasks performed by the index wizard tool, in accordance with one embodiment. First, the index wizard tool performs (at 502) workload identification, which involves the identification of the SQL statements for performance analysis. The workload can be input from the database query log 52, or alternatively, the workload is captured from the QCD 56 where execution plans are saved.

Next, the workload is defined (at 504) on the database system, which can be either the test system 10 or a target database system 14. After definition of the workload, the index wizard tool performs index analysis (at 506) on the defined workload to generate the index recommendations. The index recommendations are then validated (at 508) on the target database system 14. In the validation phase, the cost of a modified plan (with the recommended index) is compared with the cost of the original plan (without the recommended index). After validation, the index wizard tool applies the index recommendations on the target database system 14, which involves the submission of one or more DDL statements to the target database system 14 to create (at 510) the recommended indexes.

The index identification (at 502) is performed by the index wizard client module 24 in the client system 20, such as in response to user input. Thus, for example, the user (through one or more graphical user interface screens presented in the display 26 of the client system 20) can issue queries to the DBQL to identify queries that are candidates for performance improvement. Alternatively, using the visual explain and compare module 54, a query can be submitted to the QCD to extract the queries. Yet another option is for the user to type in specific SQL statements manually in the graphical user interface screen provided by the index wizard client module 24.

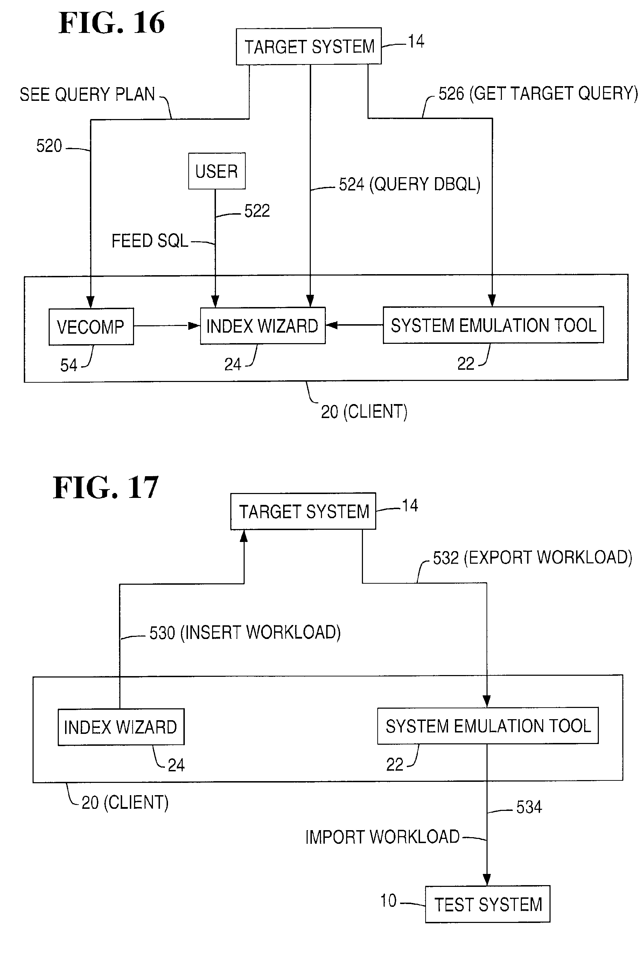

As shown in Fig. 16, the query plan(s) are retrieved (at 520) from the QCD 56 in the target database system 14. Alternatively, the user can manually type in the query(ies) that make up the workload (at 522). The input can also be input (at 522) from a file stored somewhere (either in the client system 20 or in the target database system 14). Another option is for the index wizard client module 24 to fetch (at 524) DBQL data from the database query log 52 in the target database system 14. As yet another option, one or more queries are exported (at 526) using the system emulation tool 22 to be included in the workload that is input to the index wizard client module 24.

Fig. 17 illustrates the workload definition task (504). The workload is registered in the target database system 14 to enable the use of workload data for index analysis. After identifying the set of SQL statements (at 502) that are potential candidates for performance tuning, the user submits (at 530) SQL statements with an INSERT EXPLAIN modifier from the index wizard client module 24 to capture query plans in the QCD 56 of the target database system 14. Once the plans are captured in the QCD 56, the workload is defined by associating the queries with the workload.

As shown in Fig. 3, the QCD 56 includes several tables, including a Workload table 202 and a WorkloadQueries table 204. The Workload table 202 is used to register the workload name in the QCD 56. The workload has a workload identifier (ID) that is used to link the workload with queries. The WorkloadQueries table 204 has the association of queries with a given workload.

The following provides an example of defining the workload. First, the query plans are captured in the QCD 56 using the INSERT EXPLAIN statement modifier. Example statements are provided below:
INSERT EXPLAIN FOR 10 WITH STATISTICS INTO MyQCD SELECT * FROM tab1;
INSERT EXPLAIN FOR 10 WITH STATISTICS INTO MyQCD SELECT * FROM tab2 WHERE tab2.j BETWEEN 10 AND 100;
INSERT EXPLAIN FOR 10 WITH STATISTICS INTO MyQCD SELECT * FROM tab3;

As specified in the example statements, the QCD 56 has a name MyQCD. The queries specified in the three example statements are as follows:
SELECT * FROM tab 1;
SELECT * FROM tab2 WHERE tab2.j BETWEEN 10 and 100;
SELECT * FROM tab3.

These queries are stored in a Query table 206 in the QCD 56. The "WITH STATISTICS" clause indicates that demographics information is desired. Demographics information includes information such as disk utilization information of a table on each access module, the row count and average row size of a table on each access module, column statistics, and blocks distribution, as examples. The demographics information is stored in a DataDemographics table 216 (Fig. 3) by the demography interface 25.

The "FOR 10" clause indicates the number of times (frequency) the specified SQL statement is executed. In this example, the frequency is 10.

A row is then inserted into the Workload table 202 to register the workload name. A workload ID is obtained for the workload. Using query IDs returned in response to the INSERT EXPLAIN statements, all queries from the Query table 206 along with the associated query frequencies are inserted into the WorkloadQueries table 204.

The insertion of data into the workload table 202 and the WorkloadQueries table 204 can be accomplished using macros or other predefined routines that can be invoked by the index wizard tool.

Additional query plans can be captured using statements with the INSERT EXPLAIN modifier. Using query IDs, the associated queries and corresponding frequencies are inserted into the WorkloadQueries table 204. Entries in the WorkloadQueries table can also be deleted.

As further shown in Fig. 17, the workload is exported (at 532) from the QCD 56 in the target database system 14. The exporting is performed by the system emulation tool 22. The system emulation tool 22 then imports the workload (at 534) into the QCD 60 of the test system 10 for index analysis.

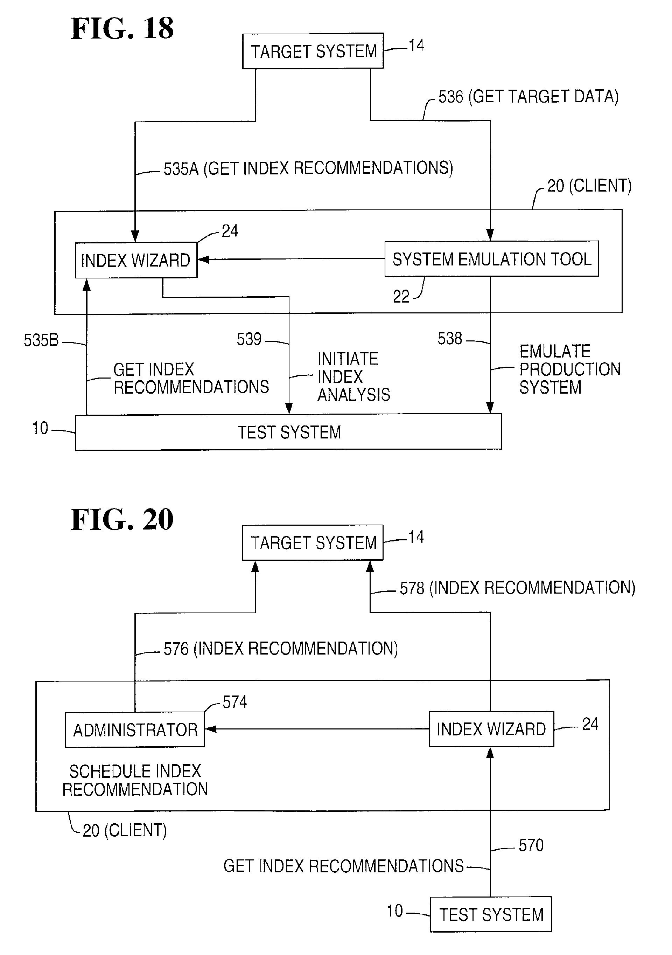

Following workload definition (504 in Fig. 15), index analysis (506) is performed. As shown in Fig. 18, the index wizard client module 24 retrieves the index recommendations from either the QCD 56 in the target database system 14 (at 535A) or from the QCD 60 in the test system 10 (at 535B). The client system 20 invokes the system emulation tool 22 to obtain TLE data (cost parameters, random AMP samples, and so forth) from the target database system 14. The system emulation tool 22 exports (at 536) the TLE data from the target database system 14. Next, the TLE data from the target database system 14 is imported (at 538) into the test system 10 at a session level to emulate the target database system 14.

Index analysis is then performed in the test system 10 by the index wizard server module 50. The workload to be analyzed is submitted in an INITIATE INDEX ANALYSIS statement sent (at 539) from the index wizard client module 24 to the test system 10. The INITIATE INDEX ANALYSIS statement has the following syntax (according to one embodiment):

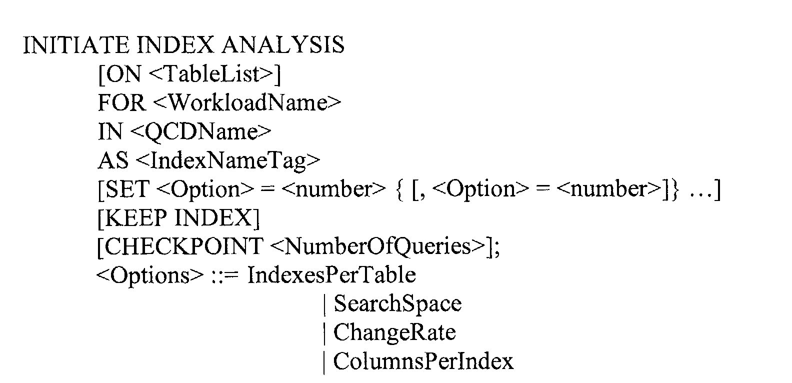

The INITIATE INDEX ANALYSIS element indicates an index analysis mode for the session in the system. The <TableList> element specifies a list of tables that are to be considered for index recommendations. The <WorkloadName > element specifies the workload to which the queries to be analyzed belong. The <QCDName> element identifies the QCD in which the Workload table is present. The index recommendations are also saved in the identified QCD (in an IndexRecommendations table 208). The <IndexNameTag> element defines a name for the index recommendations that are provided. The SET element allows a user to set the threshold values for parameters during the index analysis phase. The IndexesPerTable element indicates that the indexes on a table should not exceed a specified number. The SearchSpace element indicates the maximum number of candidate indexes that are searched for a given table. The ChangeRate element indicates whether a column can or cannot participate in an index. The index wizard tool considers a column as an index candidate if the change rate value for the column is less than this specified limit. The ColumnsPerIndex element indicates the maximum number of columns that make up a multi-column index recommended by the index wizard tool.

Each of the parameters identified above in the INITIATE INDEX ANALYSIS statement can be specified by the user in one or more GUI screens presented by the index wizard client module 24.

The index recommendations generated in response to this statement are stored in the IndexRecommendations table 208 and an IndexColumns table 210 (Fig. 3) of the specified QCD. The IndexRecommendations table 208 captures the recommendations obtained during index analysis, while the IndexColumns table 210 captures the columns of the indexes recommended for the queries.

The KEEP INDEX element is specified to indicate that existing indexes are not to be removed during the analysis. The CHECKPOINT element defines points in the index analysis where the index wizard tool pauses to record that the system has analyzed a specified number of queries for index recommendations. A record of this is saved in the AnalysisLog table 212 of the QCD to save the information pertaining to the analysis thus far. This information can be used for restarting the index analysis in case the current index analysis operation is terminated prematurely.

The objective of the index analysis is to recommend a set of indexes on the different tables referenced in the workload (and listed in the INITIATE INDEX ANALYSIS statement) that provides the maximum improvement in the response time of the workload.

The index recommendations made by the index wizard server module 50 in the test system 10 are optionally validated before actually applying the recommendations on the target database system 14. The index recommendations are retrieved (at 552) from the QCD 60 in the test system 10, or alternatively, the index recommendations are retrieved (at 550) from the target database system 14.

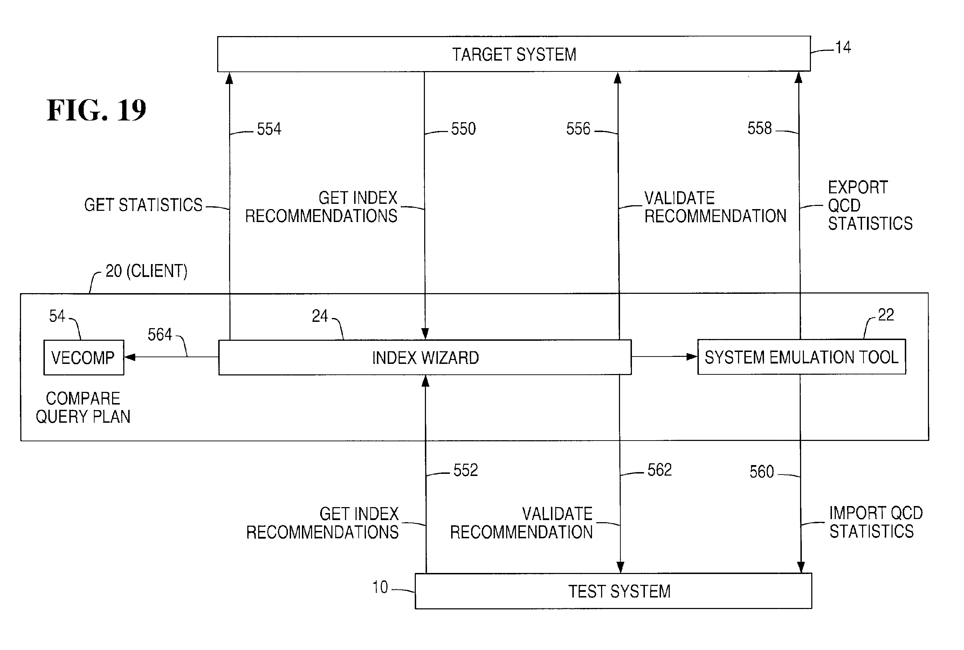

After the index recommendations are retrieved, the index wizard client module 24 submits commands (at 554) to capture statistics from the production system (one of the target database systems 14). The statistics can be captured using a new SQL COLLECT STATISTICS statement (described below) that collects statistics based on a specified percentage (less than 100) of the entire table. Alternatively, a collect statistics mechanism that is based on a full table scan be used. The command(s) to capture statistics is issued at 154 (Fig. 19). The statistics collected, using either the sample technique or the full tables scan technique, are stored in a TableStatistics table 218 in the QCD.

The validation is performed on either the target system 14 or on the test system 10. If the test system 10 is used, the statistics collected are collected on the target database system 14, and the system emulation tool 22 exports (at 558) the statistics from the QCD in the target database system 14. The statistics are imported (at 560) into the QCD 60 in the test system 10.

After loading the statistics, the index wizard client module 24 issues a command (at 562) to perform validation of the indexes in the test system 10.
In one embodiment, this statement is an SQL DIAGNOSTIC statement that enables an index validation mode for a given session level. In the index validation phase, the index recommendations are made available to the optimizer module 18 in the test system 10 for generating a query plan. During the validation phase, the modified plan that is based on the index recommendations is captured in the QCD 60 of the test system 10. The modified plan is compared with the original plan using the visual explain and compare module 42 or 54.

Alternatively, the validation can be performed in the target database system 14 (instead of the test system 10). In this case, the index wizard client module 24 submits the SQL DIAGNOSTIC statement (at 556) to the target database system 14 to perform validation. The optimizer module 19 produces different plans (with and without the recommended indexes) for comparison purposes. Also, if the validation is performed in the target database system 14, the exporting and importing of statistics (558, 560) are not performed.

The index wizard client module 24 invokes (at 564) the visual explain and compare module 54 to allow the user to compare the query plans with and without the index recommendations. In this way, the user can visualize the differences between the query plans.

After the index recommendations have been validated, the user can choose to apply the recommendations. During the index analysis phase, DDL statements were generated as part of the index analysis to apply the recommendations. As shown in Fig. 20, the index wizard client module 24 reads (at 570) the index recommendations from the QCD 60 in the test system 10. Alternatively, the index wizard client module 24 reads the index recommendations from a target database system 14. A user, through the index wizard client module 24, is able to apply the index recommendations using a scheduling administrator tool 574. The DDL statements for the index recommendations are then communicated (at 576 from the administrator module 574 or at 578 directly from the index wizard client module 24) to the target database system 14 for execution. The scheduling administrator 574 allows the DDL statements to be executed at a later time.

Instructions of the various software routines or modules discussed herein (such as access modules 22) are stored on one or more storage devices in the corresponding systems and loaded for execution on corresponding control units or processors. The control units or processors include microprocessors, microcontrollers, processor modules or subsystems (including one or more microprocessors or microcontrollers), or other control or computing devices. As used here, a "controller" refers to hardware, software, or a combination thereof. A "controller" can refer to a single component or to plural components (whether software or hardware).

Data and instructions (of the various software modules and layers) are stored in respective storage units, which can be implemented as one or more machine-readable storage media. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact disks (CDs) or digital video disks (DVDs).

The instructions of the software modules or layers are loaded or transported to each device or system in one of many different ways. For example, code segments including instructions stored on floppy disks, CD or DVD media, a hard disk, or transported through a network interface card, modem, or other interface device are loaded into the device or system and executed as corresponding software modules or layers. In the loading or transport process, data signals that are embodied in carrier waves (transmitted over telephone lines, network lines, wireless links, cables, and the like) communicate the code segments, including instructions, to the device or system. Such carrier waves are in the form of electrical, optical, acoustical, electromagnetic, or other types of signals.

While the invention has been disclosed with respect to a limited number of embodiments, those skilled in the art will appreciate numerous modifications and variations therefrom. It is intended that the appended claims cover such modifications and variations as fall within the true spirit and scope of the invention.

## Claims

1. A method of presenting demographics information in a database system, comprising:
providing a graphical user interface screen;
receiving selection of an item in the graphical user interface screen; and
in response to selection of the item, displaying the demographics information in graphical format.

2. The method of claim 2, further comprising displaying the demographics information in text format.

3. The method claims 1 or 2, comprising providing an application programming interface to depict demographics information.

4. The method of any preceding claim 1, comprising storing the demographics information in a query capture database.

5. The method of claim 1, wherein the database system has plural access modules, and wherein displaying the demographics information comprises displaying the demographics information on a per-access module basis.

6. The method of any preceding claim 1, wherein displaying the demographics information comprises displaying storage system utilization and/or statistics information.

7. The method of claim 1, wherein the database system has plural access modules and a table distributed across the access modules, and wherein displaying the demographics information comprises displaying the storage system utilization associated with each access module.

8. The method of claim 7, wherein displaying the demographics information farther comprises displaying a row count of a portion of the table stored by each of the access modules.

9. The method of claim 8, wherein displaying the demographics information farther comprises displaying an average row size of rows of the portion of the table stored by each of the access modules.

10. The method of claim 9, wherein displaying the demographics information further comprises displaying distribution of a number of blocks on each access module.

11. The method of claim 10, wherein displaying the demographics information further comprises displaying spool space utilization.

12. A database system comprising means operable to carry out the steps of the method of any of claims 1 to 11

13. A computer program comprising code adapted to perform the method of any of claims 1 to 11 when executed on a database system.

14. A computer program according to claim 13 embodied in a computer-readable storage medium.

15. A computer program according to claim 13 embodied as a transmission medium.
